# EUROPÄISCHE PATENTSCHRIFT

(11) **EP 1 301 437 B1**
(45) Veröffentlichungstag und Bekanntmachung des Hinweises auf die Patenterteilung: **03.11.2004**
(21) Anmeldenummer: 01947317.2
(22) Anmeldetag: 25.05.2001
(51) Int. Cl.: C02F 1/461, C02F 1/46

(54) **VORRICHTUNG ZUM BEHANDELN VON WASSER**
WATER TREATMENT DEVICE
DISPOSITIF DE TRAITEMENT DE L'EAU

(30) Priorität: 28.06.2000 DE 10030340
(43) Veröffentlichungstag der Anmeldung: 16.04.2003
(73) Patentinhaber: Perma-Trade Wassertechnik GMBH, 71229 Leonberg (DE)
(72) Erfinder: ENDE, Dietmar, 71287 Weissach (DE); SAUTTER, Michael, 71229 Leonberg (DE); SAUTTER, Hans, 70469 Stuttgart (DE)
(74) Vertreter: Fleck, Hermann-Josef, Dr.-Ing.
(86) Internationale Anmeldenummer: PCT/EP2001/005982
(87) Internationale Veröffentlichungsnummer: WO 2002/000555

(56) Entgegenhaltungen:
- EP-A- 1 036 769
- DE-A- 3 014 867
- US-A- 3 915 822

## Beschreibung

Die Erfindung betrifft eine Vorrichtung zur Reduzierung oder Verbinderung der Steibildung in wässrigen Lösungen mit einem Gehäuse, das Leitungsbereiche zum Führen des zu behandelnden Wassers aufweist, wobei in dem Gehäuse wenigstens eine erste und wenigstens eine zweite Elektrode untergebracht ist, wobei die ersten und zweiten Elektroden wechselnd positiv und negativ gepolt sind , wobei ein Schaltelektronik verwendet ist, die den Umpolvorgang steuert und wobei in dem Gehäuse eine Schüttung aus elektrisch leitfähigem Material eingebracht ist.

Eine derartige Vorrichtung ist aus der WO98/16477 bekannt. Diese Vorrichtung dient zur Reduzierung, bzw. zur Verhinderung der Steinbildung in wässrigen Lösungen. Hierbei wird ein Gehäuse verwendet, in das eine Kartusche eingesetzt ist. Die Kartusche besitzt zwei Elektroden, die jeweils in einer Elektrodenkammer angeordnet sind. Im Bereich zwischen den Elektroden ist eine bipolare Elektrode angeordnet, die als Festbett ausgebildet ist. Das Festbett wird von einer Schüttung gebildet, die zum einen elektrisch leitende Kohlenstoffpartikel und zum anderen nichtleitende Isolierpartikel (z.B. Kies-, Glas- oder Kunststoffkörper) aufweist. Die nichtleitenden Isolierpartikel isolieren die Kohlenstoffpartikel gegeneinander, so dass eine Kurzschlussbildung verhindert ist. Über die Elektroden wird eine Spannung an die bipolare Elektrode angelegt. Dabei erhalten dann die einzelnen Kohlenstoffpartikel eine positive und eine negative Polung. Durch die bipolare Elektrode wird nun die zu behandelnde Flüssigkeit geleitet. Das in der Flüssigkeit vorhandene Calcium wird in Form von Calcit an den negativen Polbereichen der Kohlenstoffpartikel ausgeschieden. Um eine Calcit-Ablagerung an diesem Polbereich zu verhindern, werden die Elektroden regelmäßig umgepolt.

Bei dieser bekannten Anordnung ist die gleichmäßige Durchmischung der bipolaren Elektrode und damit die gleichmäßige Verteilung der leitenden und der nichtleitenden Partikel von großer Bedeutung. Es hat sich nun aber im praktischen Einsatz gezeigt, dass beispielsweise bei Transportvorgängen oder auch teilweise während des Betriebseinsatzes eine Entmischung der bipolaren Elektrode stattfindet. Dann verliert diese ihre Wirkung und der Wirkungsgrad verschlechtert sich drastisch.

Es ist Aufgabe der Erfindung, eine Vorrichtung der eingangs erwähnten Art zu schaffen, die dauerhaft mit hohem Wirkungsgrad betrieben werden kann.

Diese Aufgabe wird dadurch gelöst, dass die ersten und zweiten Elektroden in voneinander getrennten und mittels eines oder mehreren Isolierkörpern elektrisch gegeneinander isolierten ersten und zweiten Elektrodenkammern untergebracht sind, dass die Elektrodenkammern jeweils mittels einer Schüttung aus elektrisch Leitfälingen Material ausgefüllt sind, die aus einem einheitlichen Granulat besteht, und dass die Isolierkörper für das zu behandelnde Wasser durchlässig, für das Granulat der Schüttung jedoch undurchlässig ist. In den Elektrodenkammern werden Polbereiche geschaffen, in denen eine einzige feste Polung für einen bestimmten Zeitbereich vorliegt. Infolge dieser Einteilung in unipolare Bereich kann die erfindungsgemäße, homogen zusammengesetzte Schüttung Verwendung finden, bei der eine Entmischung, wie beim Stand der Technik unproblematisch ist. Aufgrund dieser Merkmalskombination lässt sich damit ein zuverlässiger Betrieb gewährleisten.

Die Schüttung kann beispielsweise aus Kohlegranulaten, insbesondere aus Aktivkohle bestehen, die in Form eines Festbettes in die Elektrodenkammer eingebracht sind.

Gemäß einer bevorzugten Erfindungsausgestaltung ist es vorgesehen, dass die Isolierkörper als Schottwände ausgebildet sind und einen siebartigen Durchtrittsbereich für das zu behandelnde Wasser aufweisen, wobei die Öffnungsweiten der die Durchtrittsbereiche bildenden Öffnungen kleiner sind als die Kornquerschnitt-Abmessung der Teilchen der Schüttung.

Um eine möglichst großflächige Stromeinbringung in die Schüttung erreichen zu können, kann es vorgesehen sein, dass die ersten und zweiten Elektroden stabförmig ausgebildet und über ihren gesamten längsseitigen Umfang von der Schüttung umgeben sind.

Eine mögliche Erfindungsausgestaltung kann dadurch gekennzeichnet sein, dass in dem Gehäuse ein Leitungsabschnitt untergebracht ist, der von einem Bereich umgeben ist, welcher die Elektrodenkammern aufnimmt, dass der Leitungsbereich über die Durchbrüche in räumlicher Verbindung mit den Elektrodenkammern steht, dass die dem Leitungsabschnitt in radialer Richtung abgewandte Seite der Elektrodenkammern mittels eines flüssigkeitsdurchlässigen Mantels abgedeckt ist, und dass sich im Gehäuse ein Leitungsbereich an den Mantel anschließt. Dabei kann die Leitungsführung so gewählt sein, dass das zu behandelnde Wasser zunächst durch den zentralen Leitungsabschnitt zugeführt wird und anschließend durch die Elektrodenkammern und den peripheren Leitungsbereich strömt. Denkbar ist allerdings auch die umgekehrte Strömungsführung. Bei diesen Arten der Strömungsführung wird eine Rückvermischung der bei der Behandlung anfallenden Elektrolyseprodukten vermieden.

Eine erfindungsgemäße Vorrichtung kann dadurch gekennzeichnet sein, dass die Elektrodenkammern mit im Wesentlichen in Strömungsrichtung des zu behandelnden Wassers verlaufenden Isolierkörpern voneinander getrennt sind. Die einzelnen Elektrodenkammern werden dann von der zu behandelnden Flüssikgeit parallel durchflossen.

Es ist auch möglich, die Elektrodenkammern derart in Reihe zu schalten, dass sie mit quer zur Strömungsrichtung des zu behandelnden Wassers verlaufenden Isolierkörpern voneinander getrennt sind, und dass die Elektrodenkammern in Strömungsrichtung hintereinanderliegend angeordnet sind.

Eine Kombination von Parallel- und Reihenschaltung ist ebenfalls denkbar.

Um zu verhindern, dass dabei eine unzulässige Nitritbildung im Wasser stattfindet, sieht eine Weiterbildung der Erfindung vor, dass in Strömungsrichtung gesehen hinter wenigstens einer der Elektrodenkammern eine Oxidationszone angeordnet ist, durch die das in der zugeordneten Elektrodenkammer oder mehreren Elektrodenkammern behandelte Wasser geleitet ist. Als Oxidationszone kann eine Festbettelektrode, beispielsweise bestehend aus Kohlepartikeln nachgeschaltet sein, die eine positive Polarität aufweist.

Während des Betriebes erfolgt eine Calcit-Abscheidung nur im Bereich der negativ gepolten Elektrodenkammern. Um einen möglichst hohen Wirkungsgrad zu erreichen, kann eine erfindungsgemäße Vorrichtung derart gestaltet sein, dass die Elektrodenkammern unterschiedlicher Polung mit unterschiedlichen Volumenströmen des zu behandelnden Wassers durchströmt sind. Alternativ oder zusätzlich kann es vorgesehen sein, dass die Poldauern der kathodischen und der anodischen Phase wenigstens einer der Elektroden unterschiedlich gewählt sind. Das zu behandelnde Wasser hat dann in der Elektrodenkammer mit negativer Polung eine längere Verweildauer.

Um eine möglichst gleichmäßige Stromdichte in den Elektrodenkammern zu erhalten, kann eine Vorrichtung so gestaltet sein, dass die Elektroden zumindest teilweise konzentrisch zu dem im Gehäuse angeordneten Leitungsabschnitt angeordnet sind, und dass die auf einem Teilkreis um den Leitungsabschnitt herum angeordneten Elektroden zueinander in Umgebungsrichtung äquidistant verteilt sind. Um eine verbesserte Calcit-Kristaltkeimbildung zu erreichen, kann es zusätzlich vorgesehen sein, dass das zu behandelnde Wasser vor dem Eintritt in das Gehäuse eine Magnetbehandlungseinrichtung durchströmt.

Die Erfindung wird im Folgenden anhand von in den Zeichnungen dargestellten Ausführungsbeispielen näher erläutert. Es zeigen:
- Fig. 1: in Seitenansicht und im Vertikalschnitt eine Vorrichtung zum Behandeln von Wasser,
- Fig. 2: die Vorrichtung gemäß Fig. 1 im Horizontalschnitt und
- Fig. 3: einen Horizontalschnitt durch eine gegenüber den Fig. 1 und 2 abgewandelte Ausgestaltungsvariante einer Vorrichtung zum Behandeln von Wasser.

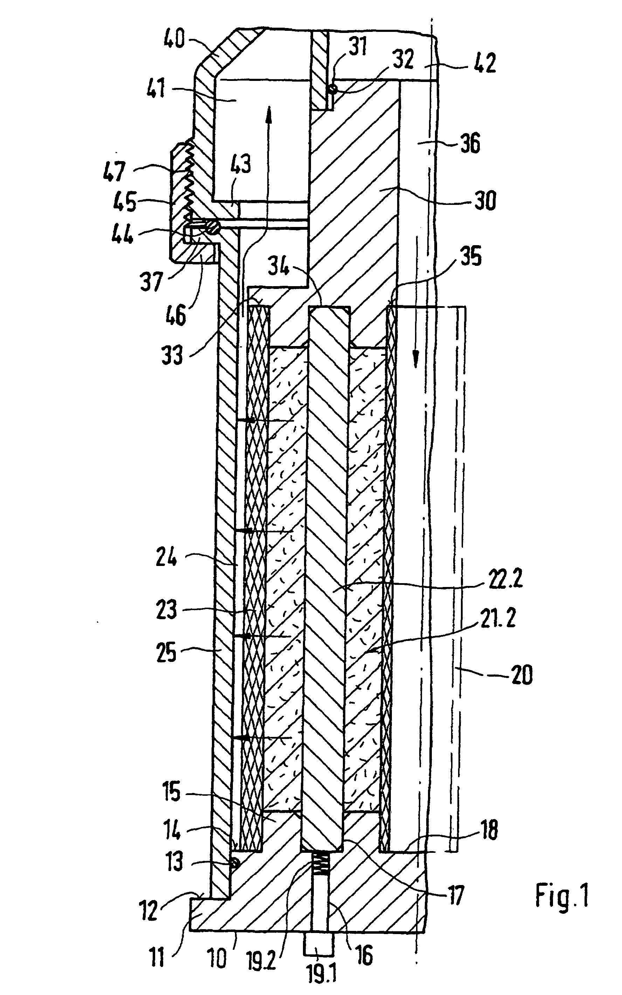

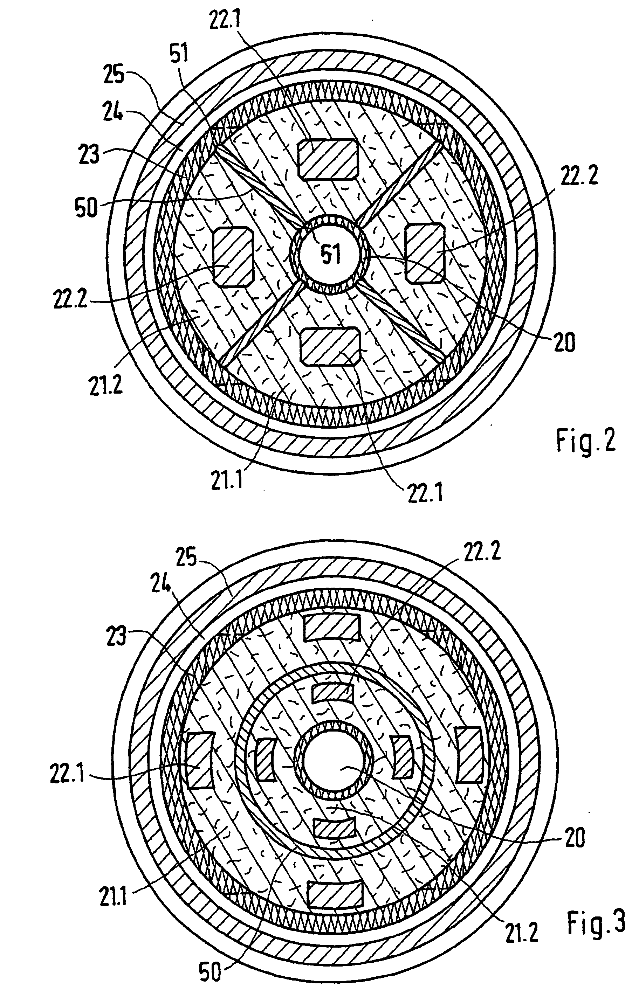

In der Fig. 1 ist eine Vorrichtung zum Behandeln von Wasser gezeigt, die ein rohrförmiges Gehäuse 25 aufweist. Das rohrförmige Gehäuse 25 ist in seinem Bodenbereich mittels eines Trägers 10 verschlossen. Der Träger 10 weist eine Flanschplatte 11 auf, die an der unteren Stirnseite des Gehäuses 25 anschlägt. Die Flanschplatte 11 bildet einen Bund 12, auf dem die Stirnseite des Gehäuses 25 aufsitzt. Im Bereich des Bundes 12 ist eine Dichtung 13 angeordnet. Diese Dichtung 13 dichtet den Innenraum des Gehäuses 25 gegenüber der Umgebung ab. In dem an den Bund 12 anschließenden Bereich besitzt der Träger 10 einen Absatz 14. Diese Absatz 14 dient zur Aufnahme eines rohrförmigen Mantels 23. Der rohrförmige Mantel 23 ist an einem zylindrischen Vorsprung 15 des Trägers 10 zentriert und ausgerichtet. Der Vorsprung 15 ragt in den, von dem Mantel 23 umgebenen Innenraum hinein. Im Zentrum des Mantels 23 ist ein Leitungsabschnitt 20 angeordnet, der in Form eines Rohres ausgebildet ist. Dieser Leitungsabschnitt 20 besitzt in seinem Mantel eine Vielzahl von Durchbrechungen. Der Leitungsabschnitt 20 ist an einer Sacklochbohrung 18 des Trägers 10 gehalten. Im Bereich zwischen dem Leitungsabschnitt 20 und dem Mantel 23 sind vier Elektroden 22.1, 22.2 angeordnet, wie dies die Fig. 2 erkennen lässt. Die Elektroden 22.1, 22.2 sind dabei konzentrisch zu dem Leitungsabschnitt 20 angeordnet und zueinander jeweils um 90° versetzt. Zur Fixierung der Elektroden 22.1, 22.2 weist der Träger 10 als Bohrungen ausgebildete Elekrodensitze 17 auf. Die Kontaktierung der Elektroden 22.1, 22.2 erfolgt über Kontaktfedern 19.2, die in eine in den Elektrodensitz 17 mündende Schraubaufnahme 16 eingeführt ist. In die Schraubaufnahme 16 ist ein Kontaktierungselement 19.1 eingeschraubt, das zum einen die Kontaktfedern 19.2 gegen die Elektroden 22.1, 22.2 presst und zum anderen auf der Außenseite des Gehäuses 25 an eine Stromversorgung angeschlossen werden kann. Der verbleibende Ringbereich zwischen dem Leitungsabschnitt 20 und dem Mantel 23 ist mit einer Schüttung aus elektrisch leitfähigem Material, beispielsweise mit Aktivkohle ausgefüllt. Wie bereits vorstehend erwähnt wurde, ist der Leitungsabschnitt 20 mit Durchbrüchen versehen und somit siebartig ausgebildet. Ebenso ist der Mantel 23 siebartig ausgebildet. Die Öffnungen der Siebe sind dabei so dimensoniert, dass die Partikel der Schüttung den Zwischenraum zwischen dem Mantel 23 und dem Leitungsabschnitt 20 nicht verlassen können, eine elektrische Isolierung zwischen den angrenzenden Bereichen aber gewährleistet ist.

Wie die Fig. 1 weiter erkennen lässt, ist kopfseitig auf den Mantel 23 ein Aufsatz 30 aufgeschoben. Hierzu weist der Aufsatz 30 einen Absatz 33 auf, der die Stirnseite des Mantels 23 aufnimmt. Der Aufsatz 30 besitzt weiterhin Elektrodensitze 34, die sacklochartig ausgebildet sind und in denen die Enden der Elektroden 22.1, 22.2 aufgenommen sind. Der Aufsatz 30 ist zentrisch von einem Leitungsabschnitt 36 durchsetzt, der in einen erweiterten Sitz 35 mündet. An diesem Sitz 35 ist der Leitungsabschnitt 20 endseitig aufgenommen. An seinem, dem Leitungsabschnitt 20 abgewandten Bereich, besitzt der Aufsatz 30 eine Schulter 31, an der über eine Dichtung 32 ein Deckel 40 abgedichtet gehalten ist. Der Deckel 40 umschließt eine äußere Kammer 41, die in räumlicher Verbindung mit einem zwischen dem Gehäuse 25 und dem Mantel 23 gebildeten Leitungsbereich 24 steht. Weiterhin besitzt der Deckel 40 eine innere Kammer 42, die in räumlicher Verbindung mit dem Leitungsabschnitt 36 des Aufsatzes 30 steht.

Zur Montage der Vorrichtung wird zunächst der Träger 10 in das Gehäuse 25 eingesetzt und in geeigneter Weise druckfest befestigt. Anschließend werden von der Oberseite des Gehäuses 25 her der Mantel 23, die Elektroden 22.1, 22.2 und der Leitungsabschnitt 20 am Träger 10 befestigt. Dann lässt sich die Schüttung einbringen. Abschließend wird der Aufsatz 30 dann deckelseitig in das Gehäuse 25 eingesetzt. Nun kann das Gehäuse 25 an seiner offenen Oberseite mit dem Deckel 40 verschlossen werden.

Wie die Fig. 1 erkennen lässt, weist der Deckel 40 einen umlaufenden Flansch 43 auf. Dieser Flansch 43 liegt unter Zwischenlage einer Dichtung 44 an einem radial nach außen gerichteten Rand 37 des Gehäuses 25 auf. Zur Verbindung des Deckels 40 mit dem Gehäuse 25 ist ein Schraubring 45 verwendet. Dieser Schraubring 45 kann mit einem Innengewinde 47 auf ein Außengewinde des Deckels 40 aufgeschraubt werden. Die Aufschraubbewegung wird dabei durch einen Anschlag 46 des Schraubringes 45 begrenzt, der an der Unterseite des Randes 37 anschlägt.

Wie die Fig. 2 erkennen lässt, ist der Zwischenraum zwischen dem Leitungsabschnitt 20 und dem Mantel 23 in vier Elektrodenkammern 21.1, 21.2 unterteilt. In diesen Elektrodenkammern 21.1, 21.2 ist jeweils eine Elektrode 22.1, 22.2 angeordnet. Die Unterteilung der Elektrodenkammern 21.1, 21.2 erfolgt mittels Isolierkörpern 50, die schottwandartig ausgebildet sind. Diese Isolierkörper 50 sind für flüssige Medien, insbesondere wässrige Lösungen durchlässig. Für die Granulate der Schüttung hingegen, sind die Isolierkörper 50 undurchlässig. Die Isolierkörper 50 sind an ihren radialen Enden in Sitzen 51 des Mantels 23, bzw. des Leitungsabschnittes 20 fixiert. Diese Sitze 51 verhindern zum einen einen Versatz der Isolierkörper 50 zum anderen verhindern sie zuverlässig eine elektrisch leitende Verbindung zwischen den einzelnen Elektrodenkammern 21.1, 21.2.

Im Betrieb wird der in den Fig. 1 und 2 dargestellten Vorrichtung zu behandelndes Wasser über die innere Kammer 42 des Deckels 40 zugeleitet. Das Wasser fließt dann über den Leitungsabschnitt 36 dem Leitungsabschnitt 20 zu. Der Mantel 23 des Leitungsabschnittes 20 wird dann von dem Wasser in radialer Richtung durchströmt. Dann gelangt das Wasser in die Elektrodenkammern 21.1, 21.2. Die jeweils benachbarten Elektrodenkammern 21.1, 21.2 weisen eine unterschiedliche Polung auf. Dementsprechend können die Elektroden 22.1 positiv, die Elektroden 22.2 dann negativ geladen sein. Im Bereich der negativ gepolten Elektrodenkammern 21.2 erfogt dann eine Calcit-Absonderung aus dem zu behandelnden Wasser. Das Calcit lagert sich dabei an den einzelnen Kohtenstoffpartikeln der Schüttung an. Nach einer gewissen Zeitspanne erfolgt ein Polwechsel. Dann werden die Elektroden 22.1 negativ, die Elektroden 22.2 positiv gepolt. Aufgrund der Polungsumkehr werden dann Cacit-Ablagerungen an den Kohlenstoffpartikel abgelöst und keimartig ausgeschwemmt. Das behandelte Wasser verlässt die Elektrodenkammern 21.1, 21.2 in radialer Richtung durch den Mantel 23 hindurch. Dort fließt es dem Leitungsbereich 24 zu und kann dann über die äußere Kammer 41 des Deckels 40 in ein Wasserleitungsnetz eingespeist werden. Die vorbeschriebene Strömungsrichtung kann selbstverständlich auch umgekehrt werden, so dass das zu behandelnde Wasser zunächst der äußeren Kammer 41 zugeführt wird. Das Wasser verläßt dann die Vorrichtung über die innere Kammer 42.

Bei der in den Fig. 1 und 2 beschriebenen Ausführungsvariante der Erfindung werden die Elektrodenkammern 21.1, 21.2 parallel durchströmt. Es ist auch möglich, eine Reihenschaltung der Elektrodenkammern 21.1, 21.2 vorzusehen. Eine solche Anordnung ist in der Fig. 3 erkennbar. Anstatt der radial angeordneten Isolierkörper 50 ist hier ein ringförmiger Isolierkörper 50 verwendet, der konzentrisch zu dem Leitungsabschnitt 20 und dem Mantel 23 angeordnet ist. Auf diese Weise werden zwei ringförmig ausgebildete Elektrodenkammern 21.1, 21.2 gebildet. In den einzelnen Elektrodenkammern 21.1, 21.2 sind jeweils vier Elektroden 22.1, 22.2 angeordnet. Ebenso wie bei der Ausführung gemäß Fig. 1 sind die einzelnen Elektroden wieder um 90° zueinander versetzt angeordnet. Aufgrund dieser Anordnung der Elektroden 22.1, 22.2 wird eine optimale und gleichmäßige Stromdichte innerhalb der einzelnen Elektrodenkammern 21.1 und 21.2 erreicht.

Bei der Ausgestaltungsvariante gemäß Fig. 3 fließt das zu behandelnde Wasser über den Leitungsabschnitt 20 zu und gelangt hier radial durch den Mantel 23 des Leitungsabschnittes 20 hindurch in die erste Elektrodenkammer 21.2. Anschließend durchströmt das Wasser den flüssigkeitsdurchlässigen Isolierkörper 50 und gelangt in die zweite Elektrodenkammer 21.1. Von hier gelangt das Wasser, ebenso wie bei der Ausgestaltung gemäß Fig. 1 und 2, durch den Mantel 23 in den Leitungsbereich 24.

Lediglich der Vollständigkeit halber sei an dieser Stelle erwähnt, dass die Vorrichtung gemäß Fig. 3 im Wesentlichen identisch zu der Vorrichtung gemäß den Fig. 1 und 2 ist. Es liegt lediglich eine unterschiedliche Anordnung der Elektroden 22.1, 22.2 und der Elektrodenkammern 21.1, 21.2 vor.

In der Elektrodenkammer 21.2 können die Elektroden 22.2 zunächst negativ gepolt sein. Dementsprechend erfolgt in der, in der Elektrodenkammer 21.1 gehaltenen Schüttung eine Calcit-Abscheidung. Das Wasser durchströmt dann die zweite Elektrodenkammer 21.1 und fließt durch den Mantel 23 ab. Nach einer gewissen Zeitdauer erfolgt eine Umpolung. Dann werden die Elektroden 22.2 positiv, die Elektroden 22.1 negativ gepolt. Die Calcit-Abscheidung erfolgt nun in der Schüttung der Elektrodenkammer 21.1. Das an den Kohlenstoffpartikeln in der Schüttung der Elektrodenkammer 21.2 abgelagerte Calcit wird bei diesem Polungszustand abgelöst und mit dem zu behandelnden Wasser ausgeschwemmt. Nach einer gewissen Zeitdauer erfolgt dann wiederum ein Polwechsel.

Es hat sich gezeigt, dass erfindungsgemäß eine Umpolung mit einer Periodendauer von größer 30 Sekunden einen guten Wirkungsgrad bringt. Wird eine geringere Zeitspanne eingehalten, so verringert sich die Effektivität und damit der Wirkungsgrad der Vorrichtung.

Aus diesem Grunde erweist es sich auch als vorteilig, wenn eine Schaltelektronik verwendet ist, die den Umpolvorgang steuert. Dabei sollten bei getakteten Wasserentahmen die Einzetdurchftusszeiten addiert werden. Erst nach der vorgegebenen Gesamt-Intervalldauer (beispielsweise von 30 Sekunden) erfolgt dann eine Umpolung.

Zur Optimierung des Betriebs der Vorrichtung kann ein Mengen-Durchflussmesser verwendet sein. Dieser ermittelt kontinuierlich oder in Zeitintervallen die Menge des durchfließenden, zu behandelnden Wassers. Die Behandlungsstromstärke wird dann in Abhängigkeit von diesem ermittelten Wert geregelt. Ein Mengen-Durchflussmesser kann auch alternativ oder zusätzlich zur Anzeige des Wartungszeitpunktes verwendet sein. Sobald eine gewisse Wassermenge ermittelt ist, wird ein Signal ausgegeben, das zum Austausch der Granulat-Schüttung auffordert.

Um Feststellungen über den Verschleißzustand treffen zu können, kann eine Messeinheit in die Vorrichtung intergriert sein, die die Leitfähigkeit der Granulat-Schüttung misst.

Eine Ausgestaltung der erfindungsgemäßen Vorrichtung kann auch dergestalt sein, dass zwei oder mehrere Gruppen von Elektroden (22.1, 22.2) gebildet sind. Zunächst wird nur eine der Gruppen betrieben, bis diese alterungsbedingt und/oder leistungsbedingt nicht mehr ausreichend funktionsfähig ist. Dann wird auf eine zweite Gruppe umgeschaltet, bzw. diese zugeschaltet.

## Patentansprüche

1. Vorrichtung zur Reduzierung oder Verhinderung der Steinbildung in wässrigen Lösungen mit einem Gehäuse, das Leitungsbereiche zum Führen des zu behandelnden Wassers aufweist, wobei in dem Gehäuse wenigstens eine erste und wenigstens eine zweite Elektrode untergebracht ist, wobei die ersten und zweiten Elektroden wechselnd positiv und negativ gepolt sind, wobei eine Schaltelektronik verwendet ist, die den Umpolvorgang steuert und wobei in dem Gehäuse eine Schüttung aus elektrisch leitfähigen Material eingebracht ist,
**dadurch gekennzeichnet,**
**dass** die ersten und zweiten Elektroden (22.1, 22.2) in voneinander getrennten und mittels eines oder mehreren Isolierkörpern (50) elektrisch gegeneinander isolierten ersten und zweiten Elektrodenkammern (21.1, 21.2) untergebracht sind,
**dass** die Elektrodenkammern (21.1, 21.3) jeweils mittels einer Schüttung aus elektrisch leitfähigem Material ausgefüllt sind, die aus einem einheitlichen Granulat besteht, und
**dass** die Isolierkörper (50) für das zu behandelnde Wasser durchlässig, für das Granulat der Schüttung jedoch undurchlässig sind.

2. Vorrichtung nach Anspruch 1,
**dadurch gekennzeichnet,**
**dass** die Schüttung als Festbettelektrode aus Kohlegranulaten besteht.

3. Vorrichtung nach Anspruch 1 oder 2,
**dadurch gekennzeichnet,**
**dass** die Isolierkörper (50) als Schottwände ausgebildet sind und einen siebartigen Durchtrittsbereich für das zu behandelnde Wasser aufweisen, wobei die Öffnungsweiten der die Durchtrittsbereiche bildenden Öffnungen kleiner sind als die Kornquerschnitt-Abmessung der Teilchen der Schüttung.

4. Vorrichtung nach einem der Ansprüche 1 bis 3,
**dadurch gekennzeichnet,**
**dass** die ersten und zweiten Elektroden (22.1, 22.2) stabförmig ausgebildet und über ihren gesamten längsseitigen Umfang von der Schüttung umgeben sind.

5. Vorrichtung nach einem der Ansprüche 1 bis 4,
**dadurch gekennzeichnet,**
**dass** in dem Gehäuse (25) ein Leitungsbereich (20) untergebracht ist, der von einem Bereich umgeben ist, welcher die Elektrodenkammern (21.1, 21.2) aufnimmt,
**dass** der Leitungsabschnitt (20) über die Durchbrüche in räumlicher Verbindung mit den Elektrodenkammern (21.1, 21.2) steht,
**dass** die dem Leitungsabschnitt (20) in radialer Richtung abgewandte Seite der Elektrodenkammern (21.1, 21.2) mittels eines flüssigkeitsdurchlässigen Mantels (23) abgedeckt ist, und
**dass** sich im Gehäuse (25) ein weiterer Leitungsbereich (24) an den Mantel (23) anschließt.

6. Vorrichtung nach einem der Ansprüche 1 bis 5,
**dadurch gekennzeichnet,**
**dass** die Elektrodenkammern (21.1, 21.2) mit im Wesentlichen in Strömungsrichtung des zu behandelnden Wassers verlaufenden Isolierkörper (50) voneinander getrennt sind.

7. Vorrichtung nach einem der Ansprüche 1 bis 6,
**dadurch gekennzeichnet,**
**dass** die Elektrodenkammer (21.1, 21.2) mit quer zur Strömungsrichtung des zu behandelnden Wassers verlaufenden Isolierkörpers (50) voneinander getrennt sind, und
**dass** die Elektrodenkammern (21.1, 21.2) in Strömungsrichtung hintereinanderliegend angeordnet sind.

8. Vorrichtung nach einem der Ansprüche 1 bis 7,
**dadurch gekennzeichnet,**
**dass** die Elektrodenkammern (21.1, 21.2) unterschiedliche Polung mit unterschiedlichen Volumenströmen des zu behandelnden Wassers durchströmt sind.

9. Vorrichtung nach einem der Ansprüche 1 bis 8,
**dadurch gekennzeichnet,**
**dass** die Poldauer der kathodischen und der anodischen Phase wenigstens einer der Elektroden (22.1, 22.2) unterschiedlich gewählt sind.

10. Vorrichtung nach einem der Ansprüche 1 bis 9,
**dadurch gekennzeichnet,**
**dass** die Elektroden (22.1, 22.2) zumindest teilweise konzentrisch zu dem im Gehäuse (25) angeordneten Leitungsabschnitt (20) angeordnet sind, und
**dass** die auf einem Teilkreis um den Leitungsabschnitt (20) herum angeordneten Elektroden (22.1, 22.2) zueinander in Umgebungsrichtung äquidistant verteilt sind.

## Claims

1. Device for reducing or preventing scale formation in aqueous solutions, comprising a housing which has conduit regions for carrying the water to be treated, at least a first and at least a second electrode being accommodated in the housing, the first and second electrodes being alternately polarized positively and negatively, switching electronics being used which control the pole reversal operation, and a filling of electrically conductive material being introduced into the housing,
**characterized**
**in that** the first and second electrodes (22.1, 22.2) are accommodated in first and second electrode chambers (21.1, 21.2) which are separated from each other and insulated electrically with respect to each other by means of one or more insulating elements (50),
**in that** the electrode chambers (21.1, 21.2) are in each case filled up by means of a filling of electrically conductive material which consists of uniform granules, and
**in that** the insulating element (50) is permeable to the water to be treated but impermeable to the granules of the filling.

2. Device according to Claim 1, **characterized in that** the filling consists of carbon granules as a fixed bed electrode.

3. Device according to Claim 1 or 2, **characterized in that** the insulating elements (50) are formed as partition walls and have a sieve-like passage region for the water to be treated, the opening widths of the openings forming the passage regions being smaller than the grain cross-sectional dimension of the particles of the filling.

4. Device according to one of Claims 1 to 3, **characterized in that** the first and second electrodes (22.1, 22.2) are rod-like and are surrounded by the filling over their entire longitudinal extent.

5. Device according to one of Claims 1 to 4, **characterized**
**in that** in the housing (25) there is accommodated a conduit region (20) which is surrounded by a region which accommodates the electrode chambers (21.1, 21.2),
**in that** the conduit section (20) is connected physically to the electrode chambers (21.1, 21.2) via the apertures,
**in that** the side of the electrode chambers (21.1, 21.2) that faces away from the conduit section (20) in the radial direction is covered by means of a liquid-permeable jacket (23), and
**in that**, in the housing (25), a further conduit region (24) adjoins the jacket (23).

6. Device according to one of Claims 1 to 5, **characterized in that** the electrode chambers (21.1, 21.2) are separated from one another by insulating elements (50) running substantially in the flow direction of the water to be treated.

7. Device according to one of Claims 1 to 6, **characterized**
**in that** the electrode chambers (21.1, 21.2) are separated from one another by insulating elements (50) running transversely with respect to the flow direction of the water to be treated, and
**in that** the electrode chambers (21.1, 21.2) are arranged one after another in the flow direction.

8. Device according to one of Claims 1 to 7, **characterized in that** the electrode chambers (21.1, 21.2) of different polarity are flowed through by different volume flows of the water to be treated.

9. Device according to one of Claims 1 to 8, **characterized in that** the polarisation durations of the cathodic and the anodic phase of at least one of the electrodes (22.1, 22.2) are chosen to be different.

10. Device according to one of Claims 1 to 9, **characterized**
**in that** the electrodes (22.1, 22.2) are arranged at least partly concentrically with respect to the conduit section (20) arranged in the housing (25), and
**in that** the electrodes (22.1, 22.2), arranged on a part circle around the conduit section (20), are distributed equidistantly from one another in the circumferential direction.

## Revendications

1. Dispositif destiné à réduire ou à empêcher la formation de tartre dans des solutions aqueuses, comportant un boîtier qui présente des zones d'amenée pour guider l'eau à traiter, dans lequel au moins une première et au moins une seconde électrode sont logées dans le boîtier; les premières et secondes électrodes présentant alternativement une polarité positive et négative, une électronique de commutation étant utilisée qui commande l'opération de changement de polarité et une charge en vrac de matière conductrice de l'électricité ayant été introduite dans le boîtier, **caractérisé en ce que** les premières et secondes électrodes (22.1, 22.2) sont logées dans des premières et secondes chambres à électrode (21.1, 21.2) séparées les unes des autres et isolées électriquement les unes par rapport aux autres au moyen d'un ou plusieurs corps isolants (50),
**en ce que** les chambres à électrode (21.1, 21.2) sont chacune remplies d'une charge en vrac de matière conductrice de l'électricité constituée d'un granulat homogène, et **en ce que** les corps isolants (50) sont perméables à l'eau à traiter et cependant impénétrables pour le granulat de la charge en vrac.

2. Dispositif selon la revendication 1, **caractérisé en ce que** la charge en vrac est constituée, en tant qu'électrode à lit fixe, de granulats de charbon.

3. Dispositif selon la revendication 1 ou la revendication 2, **caractérisé en ce que** les corps isolants (50) sont conçus comme parois de cloison et présentent une zone de passage de type à tamis pour l'eau à traiter, les largeurs d'ouverture des ouvertures formant les zones de passage étant inférieures à la dimension de section transversale de grain des particules de la charge en vrac.

4. Dispositif selon l'une quelconque des revendications 1 à 3, **caractérisé en ce que** les premières et les secondes électrodes (22.1, 22.2) sont conçues en forme de tige et sont entourées sur la totalité de leur circonférence longitudinale par la charge en vrac.

5. Dispositif selon l'une quelconque des revendications 1 à 4, **caractérisé en ce qu'**une zone d'amenée (20) est logée dans le boîtier (25), zone qui est entourée d'une zone qui reçoit les chambres à électrode (21.1, 21.2), **en ce que** le tronçon d'amenée (20) se trouve en liaison spatiale avec les chambres à électrode (21.1, 21.2) par l'intermédiaire des ouvertures, **en ce que** le côté des chambres à électrode (21.1, 21.2) tourné dans le sens radial vers l'opposé du tronçon d'amenée (20) est recouvert d'une enveloppe (23) perméable aux liquides, et **en ce que** dans le boîtier (25) une autre zone d'amenée (24) est contiguë à l'enveloppe (23).

6. Dispositif selon l'une quelconque des revendications 1 à 5, **caractérisé en ce que** les chambres à électrode (21.2, 21.2) sont séparées les unes des autres par des corps isolants (50) s'étendant essentiellement dans le sens de l'écoulement de l'eau à traiter.

7. Dispositif selon l'une quelconque des revendications 1 à 6, **caractérisé en ce que** les chambres à électrode (21.1, 21.2) sont séparées les unes des autres par des corps isolants (50) s'étendant transversalement par rapport au sens de l'écoulement de l'eau à traiter, et **en ce que** les chambres à électrode (21.1, 21.2) sont disposées les unes derrière les autres dans le sens de l'écoulement.

8. Dispositif selon l'une quelconque des revendications 1 à 7, **caractérisé en ce que** les chambres à électrode (21.1, 21.2) de polarité différente sont traversées par des débits volumétriques différents de l'eau à traiter.

9. Dispositif selon l'une quelconque des revendications 1 à 8, **caractérisé en ce que** la durée de polarité de la phase cathodique et celle de la phase anodique d'au moins l'une des électrodes (22.1, 22.2) sont choisies différentes l'une de l'autre.

10. Dispositif selon l'une quelconque des revendications 1 à 9, **caractérisé en ce que** les électrodes (22.1, 22.2) sont disposées au moins partiellement de façon concentrique par rapport au tronçon d'amenée (20) disposé dans le boîtier (25), et **en ce que** les électrodes (22.1, 22.2) disposées sur un cercle partiel autour du tronçon d'amenée (20)
sont réparties à égale distance les unes des autres dans le sens de la circonférence.
